# FASCICULE DE BREVET EUROPEEN

(11) **EP 3 670 988 B1**
(45) Date de publication et mention de la délivrance du brevet: **23.11.2022**
(21) Numéro de dépôt: 19216422.6
(22) Date de dépôt: 16.12.2019
(51) Int. Cl.: F16L 21/00, F16L 21/06

(54) **DISPOSITIF DE SERRAGE COMPRENANT UNE CEINTURE ET UNE BAGUE D'ETANCHEITE**
SPANNVORRICHTUNG, DIE EINEN RIEMEN UND EINEN DICHTUNGSRING UMFASST
CLAMPING DEVICE COMPRISING A BELT AND A SEALING RING

(30) Priorité: 17.12.2018 FR 1873094
(43) Date de publication de la demande: 24.06.2020
(73) Titulaire: Caillau, 92130 Issy-les-Moulineaux (FR)
(72) Inventeur: RIGOLLET, Nicolas, 41200 ROMORANTIN-LANTHENAY (FR); ZINBI, Abdelfettah, 41200 ROMORANTIN-LANTHENAY (FR)
(74) Mandataire: Cabinet Beau de Loménie

(56) Documents cités:
- WO-A1-2004/085901
- US-A1- 2003 015 872
- US-A1- 2014 306 449

## Description

### Domaine Technique

Le présent exposé concerne un dispositif de serrage comprenant une ceinture ayant une première et une deuxième extrémité, une bague d'étanchéité disposée à l'intérieur de la ceinture, et une première et une deuxième oreille de serrage portées par la ceinture, respectivement au voisinage de sa première et de sa deuxième extrémité, les oreilles pouvant être déplacées l'une par rapport à l'autre pour serrer la ceinture.

En particulier, un tel dispositif sert au raccordement de deux tubes avec étanchéité. Il peut s'agir de deux tubes lisses disposés en bout-à-bout, la bague d'étanchéité coopérant alors avec le plan de joint entre les bouts des tubes, ou bien de deux tubes emmanchés l'un dans l'autre et présentant des surfaces d'appui de type renflement ou analogue, auquel cas la bague d'étanchéité peut coopérer avec les sommets de ces renflements pour ménager entre eux un espace fermé de manière étanche.

### Technique antérieure

Le document US 2011/210546 divulgue un dispositif comprenant une ceinture de serrage externe pourvue d'oreilles de serrage, une ceinture interne disposée à l'intérieur de la ceinture externe et une bague d'étanchéité disposée dans un renfoncement de la ceinture interne. La ceinture externe assure le serrage, tandis que la combinaison de la bague d'étanchéité et de la ceinture interne assure l'étanchéité. Les extrémités de la ceinture interne présentent des configurations à languettes et encoches, les languettes pénétrant dans les encoches pour assurer un contact étanche lors du serrage de la ceinture externe. Ce système est relativement complexe, car il implique de manipuler et d'assembler les trois pièces différentes que constituent la ceinture externe, la ceinture interne et la bague d'étanchéité, ces pièces devant être parfaitement positionnées et calées les unes par rapport aux autres.

Le document US 2003/015872 propose un dispositif comprenant, dans une de ses variantes, une ceinture, des oreilles fixées à cette ceinture, et une bague d'étanchéité disposée à l'intérieur de la ceinture. Ce système est plus simple car il ne nécessite pas de ceinture de serrage en plus de la ceinture qui contient la bague d'étanchéité. Cependant, le calage de la bague d'étanchéité à l'intérieur de la ceinture est aléatoire, et l'étanchéité du contact entre les extrémités de la ceinture est peu convaincante.

### Exposé de l'invention

Le présent exposé vise à améliorer l'état de la technique précité en proposant un dispositif sensiblement exempt des inconvénients rappelés ci-dessus, en particulier un dispositif simple à manipuler et fiable.

Ainsi, le présent exposé concerne un dispositif de serrage selon la revendication 1.

Ainsi, la bague d'étanchéité est reçue dans le renfoncement annulaire de la ceinture et, dans la mesure où elle occupe sensiblement toute la largeur de ce renfoncement, elle est calée entre les ressauts qui délimitent ce renfoncement. Ce calage reste effectif à la jonction entre les première et deuxième extrémités de la ceinture puisque la bague d'étanchéité y est maintenue latéralement par les parties de ressauts que comprennent les languettes latérales. L'agencement d'étanchéité est directement réalisé sur les extrémités de la ceinture, en une seule pièce avec elle, assurant ainsi un contact étanche entre ces extrémités à l'état serré de la ceinture. Cependant, la bague d'étanchéité disposée à l'intérieur de la ceinture n'est que très peu exposée à l'extérieur, ses bords étant protégés par les languettes latérales qui la reçoivent dans leurs portions de ressaut.

Optionnellement, le renfoncement présente un fond plat qui s'étend d'un ressaut de calage à l'autre.

Optionnellement, les oreilles de serrage sont formées dans des portions de bande rapportées sur la ceinture.

Optionnellement, les portions de bande dans lesquelles sont formées les oreilles de serrage présentent une largeur inférieure ou égale à la largeur du renfoncement et sont fixées sur la face radialement externe du renfoncement.

Optionnellement, la portion de bande dans laquelle est formée la première oreille est fixée à la ceinture en au moins une première zone de fixation qui se trouve sur la languette centrale.

Optionnellement, la portion de bande dans laquelle est formée la première oreille est en outre fixée à la ceinture en au moins une deuxième zone de fixation qui, à l'état serré de la ceinture, s'étend au-delà des extrémités des languettes latérales dans le sens allant, en suivant la circonférence de la ceinture, de la première extrémité vers la deuxième extrémité de la ceinture.

Optionnellement, la largeur du renfoncement représente au moins 60%, de préférence au moins 70% voire 80% de la largeur de la ceinture.

Optionnellement, la largeur minimale de la languette centrale représente au moins 50%, de préférence au moins 60% voire 70% de la largeur de la ceinture.

Optionnellement, les languettes latérales ont une longueur comprise entre 50% et 150%, optionnellement entre 70% et 120%, de la largeur de la ceinture.

Optionnellement, le dispositif comprend deux premières oreilles de serrage disposées au voisinage de la première extrémité de la ceinture sur deux portions distinctes de la largeur de la ceinture, et deux deuxièmes oreilles de serrage disposées au voisinage de la deuxième extrémité de la ceinture sur deux portions distinctes de la largeur de la ceinture.

Optionnellement, les portions distinctes de la largeur de la ceinture sur lesquelles sont disposées les deux premières oreilles et/ou les deux deuxièmes oreilles, sont séparées par une fente circonférentielle de la ceinture.

Optionnellement, le dispositif comprend une tige de serrage, retenue par rapport aux deux oreilles.

Dans le dispositif selon le présent exposé, la bague d'étanchéité occupe le volume du renfoncement et est calée sur ses bords par les ressauts qui délimitent ce renfoncement. Les oreilles de serrage peuvent être directement intégrées avec la ceinture ou bien être formées par des portions de bande rapportées. Ainsi, la ceinture peut être dans un matériau se déformant plus aisément que les oreilles de serrage. En particulier, les oreilles de serrage et la ceinture peuvent être réalisées dans des feuillards métalliques, celui dans lequel sont réalisées les oreilles pouvant être mécaniquement plus résistant, par exemple en ayant une épaisseur supérieure. Ceci étant, selon les applications, on peut au contraire réaliser la ceinture dans un feuillard plus épais, en particulier lorsque les oreilles de serrage sont conformées pour avoir des renforts s'opposant à leur basculement lors du serrage. Le renfoncement peut occuper une proportion significative de la largeur de la ceinture, permettant ainsi à la bague d'étanchéité d'avoir une largeur conséquente, favorable à l'étanchéité dans certaines configurations, en particulier lorsque l'étanchéité est assurée par contact entre la bague d'étanchéité et les renflements de deux tubes raccordés entre eux et serrés à l'aide du dispositif de serrage. Lorsque ce dispositif est équipé de deux premières oreilles de serrage et de deux deuxièmes oreilles de serrage, les efforts de serrage appliqués aux différentes oreilles peuvent être dissociés du fait de la présence des fentes circonférentielles.

Le présent exposé sera bien compris et ses avantages apparaîtront mieux à la lecture de la description détaillée qui suit, d'un mode de réalisation représenté à titre d'exemple non-limitatif. La description se réfère aux dessins annexés.

### Brève description des dessins annexés

[Fig. 1] La figure 1 est une vue en perspective d'un dispositif de serrage selon l'invention.
[Fig. 2] La figure 2 est une vue en coupe dans le plan II-II de la figure 1.
[Fig. 3] La figure 3 est une vue en perspective du dispositif de la figure 1 sans la bague d'étanchéité, dans une vue prise globalement selon la flèche III de la figure 1.
[Fig. 4] La figure 4 montre en perspective le dispositif des figures 1 à 3 serré sur deux tubes.
[Fig. 5] La figure 5 est une vue en coupe dans le plan V-V de la figure 4.
[Fig. 6] La figure 6 est une vue analogue à la figure 1 montrant un autre mode de réalisation.
[Fig. 7] La figure 7 est une vue en coupe selon le plan VII-VII de la figure 6.
[Fig. 8] La figure 8 est une vue analogue à la figure 6, montrant le dispositif sans ses oreilles de serrage.
[Fig. 9] La figure 9 est une vue en perspective montrant l'intérieur du dispositif sans la bague de serrage, globalement prise selon la flèche IX de la figure 6.
[Fig. 10] La figure 10 est une vue en coupe dans un plan parallèle à l'axe de la ceinture et comprenant un diamètre de cette dernière, montrant le dispositif serré sur les extrémités de deux tubes.
[Fig. 11] La figure 11 est une vue de dessus montrant une partie de la face radialement externe d'une ceinture selon une variante, dans la région de ses extrémités.
[Fig. 12] La figure 12 est une section selon la ligne XII-XII de la figure 11.

### Description des modes de réalisation

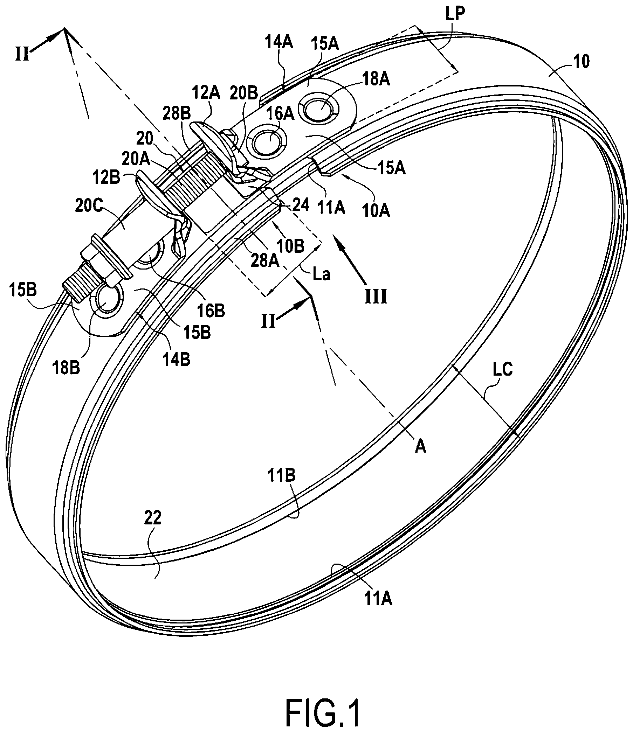

Le dispositif de serrage représenté sur la figure 1 comprend une ceinture 10 ayant une première et une deuxième extrémité, respectivement 10A et 10B. Cette ceinture porte une première et une deuxième oreille de serrage, respectivement 12A et 12B, respectivement situées au voisinage de la première et de la deuxième extrémité 10A et 10B. En l'espèce, les oreilles de serrage 12A et 12B sont formées dans des portions de bande 14A et 14B, qui sont rapportées sur la ceinture. En l'espèce, chaque oreille est formée en une seule pièce avec la portion de bande qui la porte, cette portion de bande présentant une partie de semelle, respectivement 15A et 15B qui est disposée contre la face radialement externe de la ceinture 10 et orientée sensiblement selon la direction circonférentielle de cette ceinture, et une portion redressée qui forme l'oreille, respectivement 12A et 12B.

En l'espèce, chacune des portions de bande 14A et 14B est fixée à la ceinture par deux zones de fixation respectivement 16A, 18A et 16B, 18B dont au moins l'une, par exemple la deuxième zone de fixation 18A, 18B est formée sur un bossage. La première zone de fixation, 16A et 16B, peut également être formée sur un bossage et être réalisée par soudure. Elle peut également être formée d'une manière différente, par exemple par clinchage ou sous la forme d'un plot de centrage qui coopère avec une ouverture de la ceinture. Dans l'exemple représenté, chacune les deux zones de fixation de chaque portion de bande est formée par un bossage, réalisé dans la semelle de la portion de bande considérée et en saillie vers la ceinture. On pourrait prévoir une disposition inverse, le bossage étant réalisé dans la ceinture et en saillie vers la semelle de la portion de bande, ou bien une configuration mixte, avec un bossage dans la semelle de la portion de bande et l'autre dans la ceinture.

On pourrait cependant prévoir d'autres modes de fixation des portions de bande portant les oreilles sans sortir de la portée du présent exposé. On pourrait encore prévoir que les oreilles soient formées en une seule pièce avec la ceinture.

Quoiqu'il en soit, on comprend que les oreilles peuvent être déplacées l'une par rapport à l'autre pour serrer la ceinture. Dans l'exemple représenté, ce serrage est opéré en rapprochant les oreilles à l'aide d'une tige de serrage qui coopère avec elles. En l'espèce, cette tige de serrage est formée par la tige 20A d'une vis 20 dont la tête 20B (ou un écrou coopérant avec la tige) est retenue derrière l'une des oreilles, tandis qu'un écrou 20C coopérant avec la tige 20A est retenu derrière l'autre oreille. La tige traverse en l'espèce des perçages des oreilles.

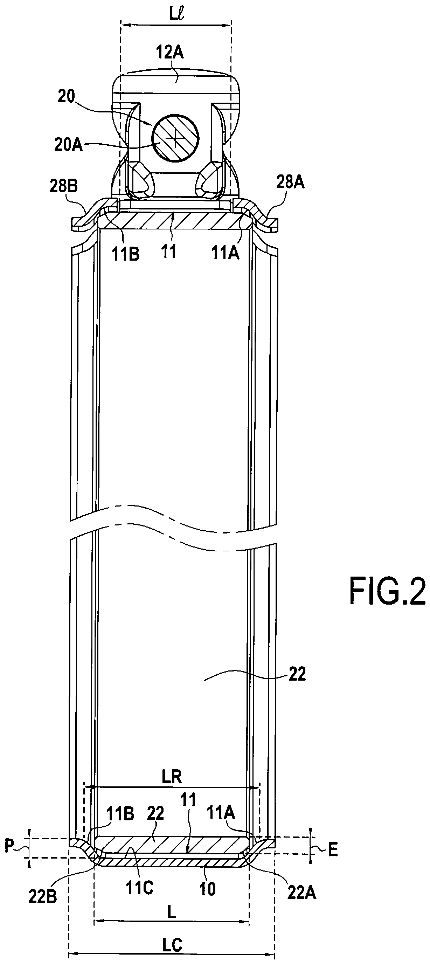

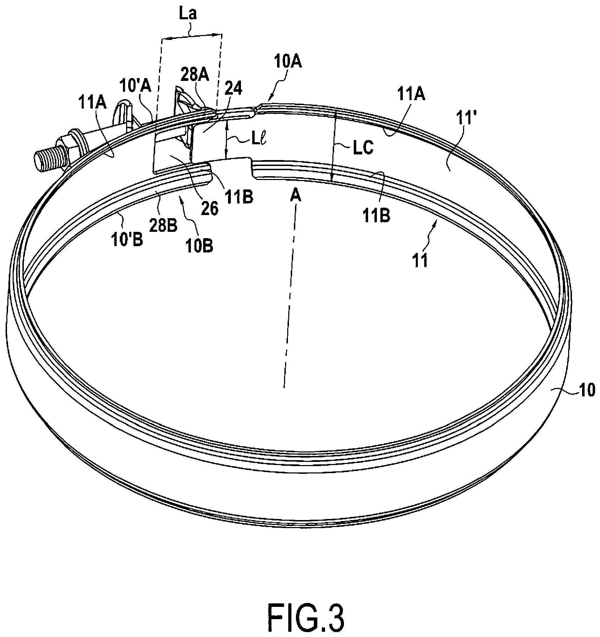

Comme on le voit mieux sur les figures 2 et 3, la ceinture présente un renfoncement annulaire 11 formé sur sa face radialement interne.

Par convention, on définira de "radialement internes" les éléments qui sont disposés vers l'axe A de la ceinture par opposition aux éléments radialement externes qui sont éloignés de cet axe. Egalement par convention, on considérera que la direction vers l'avant est celle du déplacement d'une oreille lors du serrage. Ainsi, en l'espèce, dans la mesure où les oreilles sont rapprochées l'une de l'autre pour réaliser le serrage, le côté avant d'une oreille est celui qui est tourné vers l'autre oreille, tandis que le côté arrière est le côté opposé.

Les bords annulaires du renfoncement forment des ressauts de calage, respectivement 11A et 11B. Une bague d'étanchéité 22 (omise sur la figure 3 pour la clarté du dessin) est disposée dans le renfoncement 11. Cette bague d'étanchéité est formée à partir d'une bande plate enroulée sur elle-même. La bague peut être fermée ou ouverte.

En l'espèce, le renfoncement 11 présente un fond plat 11' qui s'étend de l'un à l'autre des ressauts de calage 11A et 11B. La profondeur P du renfoncement correspond sensiblement à l'épaisseur E de la bague d'étanchéité 22. La profondeur P du renfoncement 11 est délimitée entre le fond cylindrique de ce dernier et une surface cylindrique tangente à la surface radialement interne de la ceinture 10 sur les bords de cette dernière, de part et d'autre du renfoncement. Ainsi, la bague d'étanchéité est reçue dans le renfoncement en étant calée dans ce dernier. On voit sur la figure 2 que la largeur L de la bague d'étanchéité mesurée entre ses deux bords annulaires situés dans des plans radiaux correspond à la largeur LR du renfoncement. Plus précisément, la largeur LR est égale à la largeur L ou très légèrement supérieure à cette dernière. Ainsi, la bague d'étanchéité est non seulement logée dans son épaisseur dans le renfoncement, mais également calée latéralement entre les deux ressauts 11A et 11B. Comme on le voit sur la figure 2, les bords annulaires de la bague d'étanchéité 22, en particulier ses bords extérieurs, peuvent être légèrement biseautés ou émoussés pour s'adapter à la transition entre les ressauts de calage 11A, 11B et le fond 11C du renfoncement 11.

La bague d'étanchéité est en particulier dans un matériau de type graphite ou à base de graphite, mais il peut également s'agir d'un matériau à base de mica, de fibres céramiques ou de fibres de verre, ou en général d'un matériau composite convenable pour assurer l'étanchéité en particulier par compression ou déformation.

La première extrémité 10A de la ceinture 10 présente un agencement mâle d'étanchéité, en l'espèce une languette centrale 24, tandis que sa deuxième extrémité 10B présente une encoche centrale 26 formant un agencement femelle d'étanchéité. On comprend que la languette centrale 24 pénètre dans l'encoche centrale 26 lors du serrage de la ceinture. Cette encoche centrale 26 est délimitée entre des languettes latérales, respectivement 28A et 28B. La languette 28A s'étend, dans le sens de la largeur de la ceinture, c'est-à-dire parallèlement à l'axe A de cette dernière, depuis le bord annulaire 10'A de cette ceinture jusqu'au renfoncement 11. De même, la languette 28B s'étend depuis le bord annulaire 10'B opposé de la ceinture jusqu'au renfoncement 11. Ainsi, chaque languette latérale 28A et 28B comprend une partie de l'un des ressauts de calage. Ainsi, sur les figures 2 et 3, on voit que le ressaut de calage 11A s'étend dans la languette 28A, en l'espèce sur toute la longueur de cette languette, et que, de même, le ressaut de calage 11B s'étend dans la languette 28B, sur la longueur de cette languette.

Comme on le voit en particulier sur la figure 2, la bague d'étanchéité 22 est ainsi également calée latéralement dans la région des languettes 28A et 28B. Cette bague d'étanchéité se trouve ainsi protégée sur ses bords en plus d'être protégée par la languette centrale 24 sur sa face radialement externe. Lors du serrage de la ceinture, ses deux extrémités 10A et 10B se rapprochent l'une de l'autre en comprimant ainsi la bague d'étanchéité 22. Le calage de cette bague d'étanchéité dans la région des languettes latérales contribue à cette compression et à son homogénéité, en évitant d'user ou d'endommager la bague d'étanchéité dans cette zone particulièrement sujette aux risques de fuites.

Comme indiqué, la bague d'étanchéité peut être un anneau fermé. Si elle a la forme d'un anneau ouvert, le plan de joint entre les deux extrémités de cet anneau peut être disposé à distance des extrémités de la ceinture.

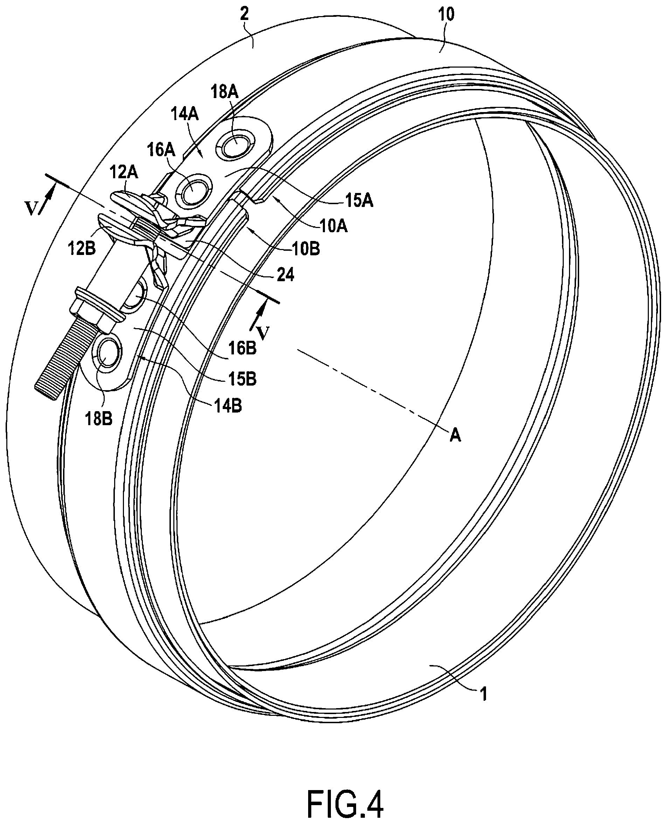

La figure 4 montre le dispositif de serrage à l'état serré sur deux tubes 1 et 2 raccordés à l'intérieur de ce dispositif. On voit que, dans cet état serré, une très faible portion de la longueur de la bague d'étanchéité est exposée latéralement, à l'extrémité libre des languettes latérales 28A et 28B.

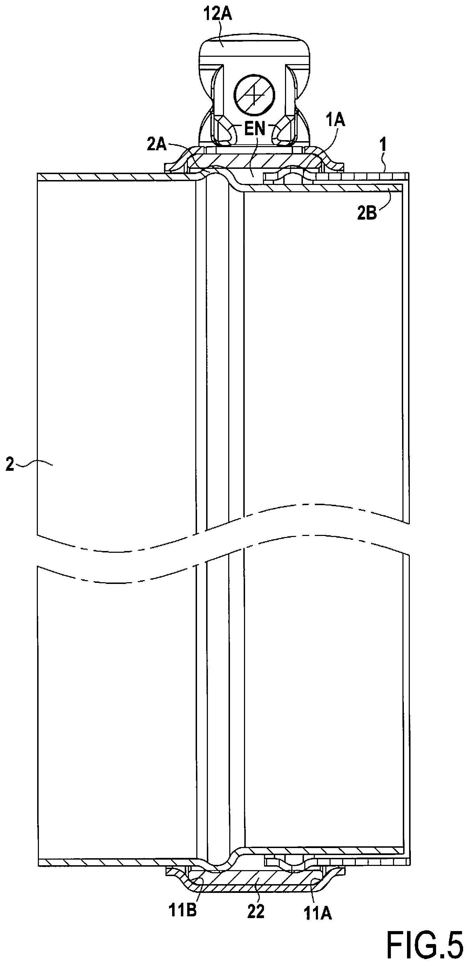

Comme on le voit mieux sur la figure 5, les tubes 1 et 2 présentent en l'espèce chacun un renflement annulaire, 2A pour le tube 2 et 1A pour le tube 1. En l'espèce, le tube 2 présente une extrémité libre 2B emmanchée dans le tube 1. Dans cet état emmanché, les deux renflements annulaires 1A et 1B sont coiffés par le dispositif de serrage et, plus précisément, par la bague d'étanchéité 22. L'enceinte EN ainsi ménagée entre les bourrelets 1A et 2A des tubes et la bague d'étanchéité 22 est ainsi fermée vis-à-vis de l'extérieur.

Dans l'exemple représenté, la largeur LR du renfoncement représente en l'occurrence au moins 60 %, de préférence au moins 70 %, voire 80 % de la largeur LC de la ceinture, mesurée d'un bord annulaire à l'autre de cette dernière.

En référence aux figures qui viennent d'être décrites, on voit encore que, dans l'exemple représenté, les portions de bande 14A et 14B dans lesquelles sont formées les oreilles de serrage présentent une largeur LP qui est légèrement inférieure à la largeur LR du renfoncement 11. Ces portions de bande 14A et 14B, plus précisément leurs semelles 15A et 15B sont fixées sur la face radialement externe du renfoncement 11. En l'occurrence, la portion de bande 14A dans laquelle est formée la première oreille 12A est fixée à la ceinture 10 dans la région de la languette centrale 24. On voit que la première zone de fixation 16A de cette portion de bande 14A est située sur la languette centrale 24. En l'espèce, la largeur LP de la semelle 15A est analogue à la largeur Lf de cette languette centrale 24. Cette fixation sur la languette centrale permet de favoriser l'appui radial de cette languette sur la bague d'étanchéité lors du serrage. En revanche, on voit que la deuxième zone de fixation 18A est située en arrière de la languette centrale 24A. Plus précisément, à l'état serré du collier visible sur la figure 4, les extrémités des languettes latérales 28A et 28B sont situées à l'avant de cette zone de fixation 18A. Dit autrement, la deuxième zone de fixation 18A se trouve, à l'état serré, au-delà des extrémités des languettes latérales 28A et 28B dans le sens allant, en suivant la circonférence de la ceinture 10, de sa première extrémité 10A vers sa deuxième extrémité 10B, sans passer par le plan de joint entre ces deux extrémités.

Dans le mode de réalisation qui vient d'être décrit, le dispositif comporte une seule première oreille 12A et une seule deuxième oreille 12B.

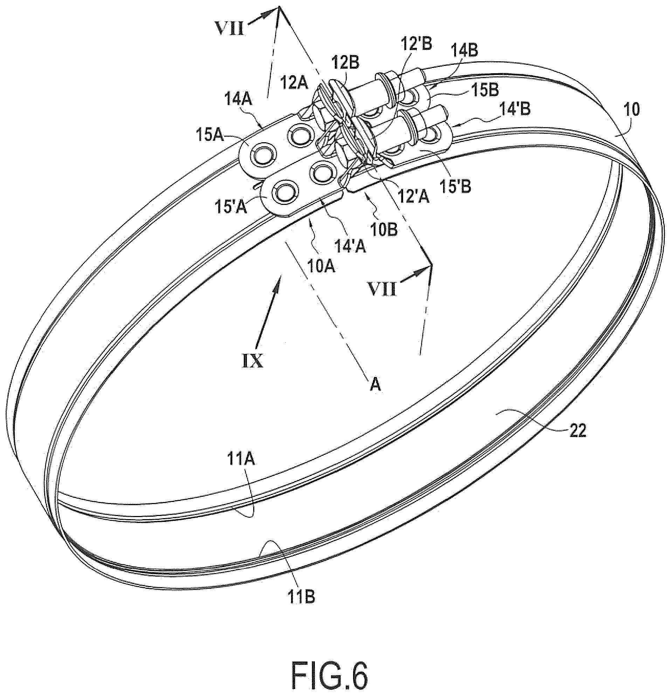

On décrit maintenant les figures 6 et suivantes qui montrent une variante dans laquelle le dispositif comprend deux premières oreilles et deux deuxièmes oreilles. Sur ses figures, les éléments inchangés par rapport aux figures précédentes sont désignés par les mêmes références. On voit que le dispositif comprend deux premières oreilles, respectivement 12A et 12'A, disposées côte à côte dans le sens de la largeur de la ceinture à sa première extrémité 10A, et deux deuxièmes oreilles, respectivement 12B et 12'B disposées côte à côte à la deuxième extrémité 10B de la ceinture. En l'espèce, les oreilles sont formées comme dans le premier mode de réalisation, c'est-à-dire dans une portion de bande fixée à la ceinture par sa semelle. On peut par exemple identifier sur la figure 6 la portion de bande 14A dans laquelle est formée la première oreille 12A, dont la semelle 15A est fixée à la face radialement externe de la ceinture, et la portion de bande 14'A, dans laquelle est formée l'autre première oreille 12'A et dont la semelle 15'A est fixée à la ceinture. Les deux premières oreilles sont identiques, de même que les deux deuxièmes oreilles.

Les semelles 15A et 15'A sont disposées côte à côte dans le sens de la largeur et présentent chacune une largeur sensiblement égale à la moitié de la largeur LC de la ceinture. Ainsi, les deux premières oreilles sont disposées sur deux portions distinctes de la largeur de la ceinture et les deux deuxièmes oreilles sont disposées sur deux portions distinctes de la largeur de la ceinture.

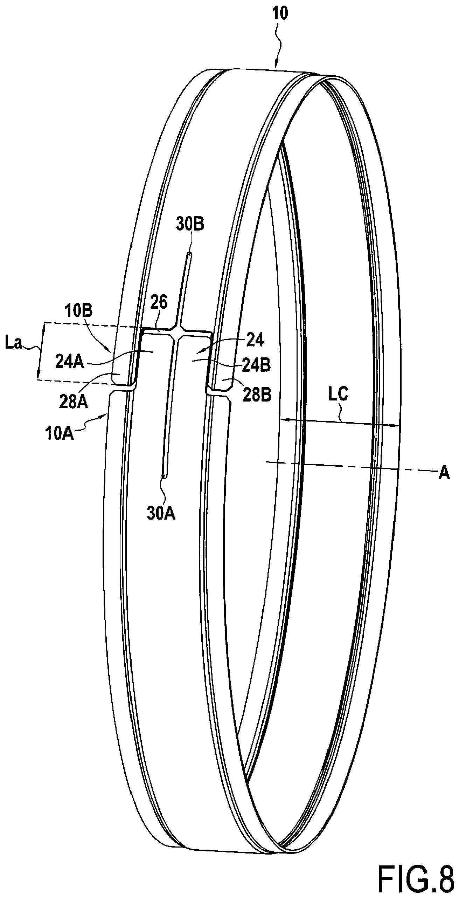

En se référant en particulier à la figure 8, on voit que les portions distinctes respectives sont séparées par les fentes circonférentielles. Ainsi, la première extrémité 10A de la ceinture présente une fente circonférentielle 30A qui s'étend vers l'arrière à partir de l'extrémité libre de cette première extrémité, sur une longueur sensiblement égale à celle des semelles 15A et 15'A des portions de bande 14A et 14'A qui portent les premières oreilles 12A et 12'A. Ainsi, la fente circonférentielle 30A divise la languette centrale 24 en deux portions de languettes 24A et 24B. De même, la deuxième extrémité 10B de la ceinture présente une fente circonférentielle 30B qui s'étend à partir de son extrémité libre sur une longueur sensiblement égale à celle des semelles 15B et 15'B des portions de bande 14B et 14'B dans lesquelles sont formées les deuxièmes oreilles 12B et 12'B.

Les fentes circonférentielles 30A et 30B sont disposées vers le milieu de la largeur de la ceinture. Par conséquent, la fente circonférentielle 30B part du fond de l'encoche centrale 26 et s'étend vers l'arrière comme indiqué. Les longueurs des fentes 30A et 30B peuvent être sensiblement égales. Cependant, dans l'exemple représenté, la fente 30A est plus longue que la fente 30B. En l'espèce, les longueurs des fentes sont telles que ces fentes ne dépassent pas ou pratiquement pas à l'arrière des semelles des portions de bande dans lesquelles sont formées les oreilles.

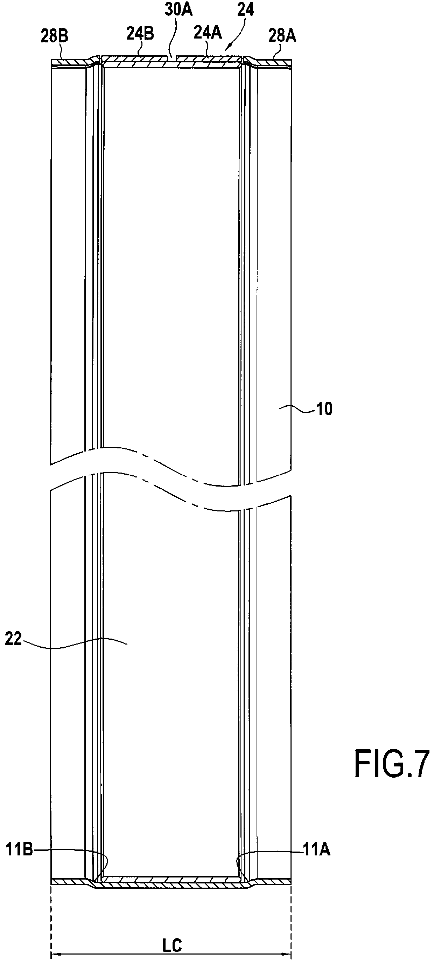

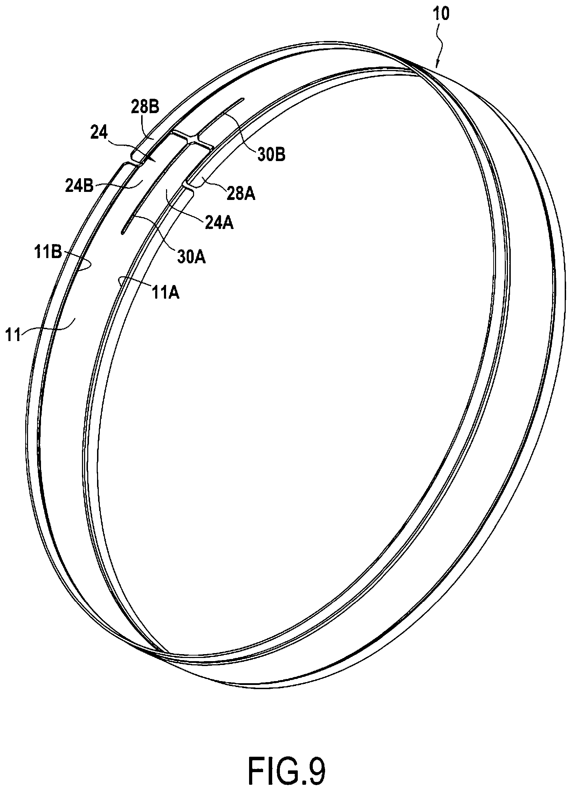

Mis à part la présence des fentes 30A et 30B, la ceinture est analogue à celle du mode de réalisation des figures précédentes. En particulier, elle présente le renfoncement 11 précédemment décrit. Sur la figure 7, on voit que la bague d'étanchéité 22 est reçue dans ce renfoncement en étant calée latéralement par les ressauts 11A et 11B, mieux visibles sur la figure 9.

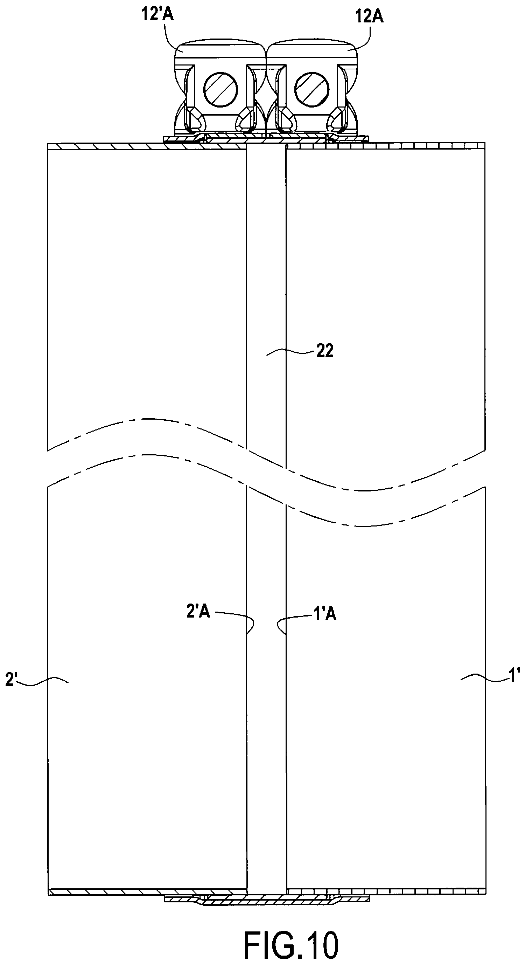

La figure 10 montre le dispositif de serrage de la figure 6 disposé aux extrémités de deux tubes 1' et 2' que ce dispositif sert à raccorder. En l'espèce, on voit que ces tubes sont lisses, leurs extrémités libres, respectivement l'A et 2'A se faisant face en étant disposées bout à bout, de manière jointive ou non. En l'espèce, pour la clarté du dessin, ces extrémités sont représentées non jointives. On voit que la bague d'étanchéité 22 couvre le plan de joint entre ces deux extrémités libres. On voit également que la première oreille 12A est située radialement au-dessus du tube 1', tandis que la première oreille 12'A est située radialement au-dessus du tube 2'. De même, les deuxièmes oreilles 12B et 12B' sont respectivement situées radialement au-dessus du tube 1' et du tube 2', les oreilles 12A et 12B étant alignées dans la direction circonférentielle, de même que les oreilles 12'A et 12'B. Du fait de la présence des fentes circonférentielles 30A et 30B, les portions de la ceinture sur lesquelles sont situées, d'une part, les oreilles 12A et 12B, et, d'autre part, les oreilles 12'A et 12'B, peuvent se comporter de manière légèrement différente lors du serrage. On assure ainsi que la ceinture soit parfaitement serrée sur chacun des deux tubes même si les diamètres de ceux-ci sont très légèrement différents ou si les déplacements des oreilles de chaque paire ne sont pas strictement synchronisés.

Dans les exemples qui viennent d'être décrits, la languette centrale 24 a une largeur sensiblement constante sur toute sa longueur. En effet, les bords latéraux de cette languette sont parallèles à la direction circonférentielle de la ceinture, qui correspond à la direction de la longueur de la bande dans laquelle est formée cette ceinture. De même, les languettes latérales 28A et 28B sont également parallèles à cette direction, en particulier en ce qui concerne leurs bords internes entre lesquels vient se loger la languette centrale.

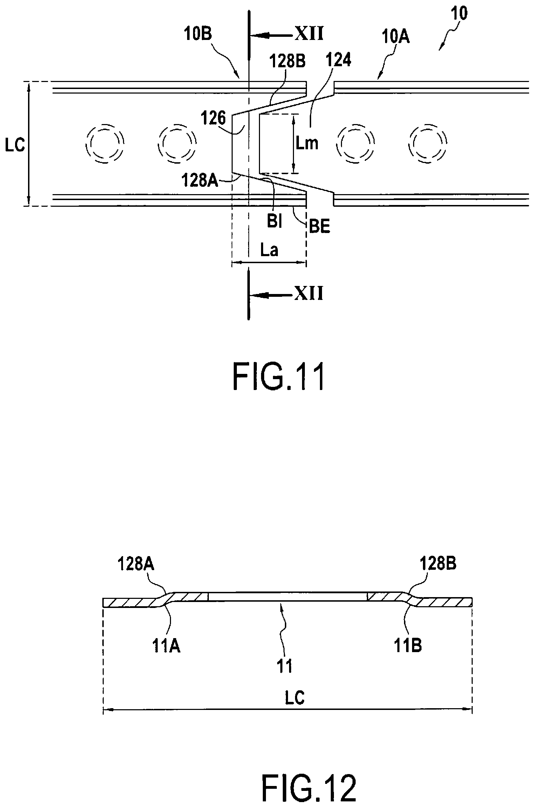

Les figures 11 et 12 montrent une variante. Sur ces figures, les éléments inchangés par rapport aux figures précédentes sont désignés par les mêmes références. Ainsi, la ceinture 10 présente un renfoncement annulaire 11 comme sur les figures précédentes. La languette centrale 124 disposée à la première extrémité 10A de la ceinture présente une largeur qui va en diminuant vers son extrémité libre, jusqu'à une largeur minimale Lm. Vue de dessus, cette languette centrale définit ainsi une forme sensiblement trapézoïdale. L'encoche centrale 126 présente une forme adaptée à celle de cette languette centrale 124 et donc une largeur qui diminue jusqu'à son fond. Les languettes latérales 128A et 128B présentent ainsi des bords externes BE qui sont parallèles à la direction circonférentielle de la ceinture, mais des bords internes BI qui sont inclinés par rapport à cette direction. On constate cependant, en particulier dans la section de la figure 12, que le renfoncement 11 s'étend en partie dans ces languettes latérales 128A et 128B de sorte que chacune de ces languettes latérales comprend une partie de l'un des ressauts 11A et 11B.

La largeur Lf de la languette centrale 24 est également sa largeur minimale puisque les bords de cette languette sont parallèles. Ainsi, de manière générale, la largeur minimale Lℓ de la languette 24 ou Lm de la languette 124 peut représenter au moins 50%, de préférence au moins 60% voire 70% de la largeur LC de la ceinture.

Comme on le voit notamment sur les figures 3 et 11, la longueur La des languettes latérales 28A et 28B ou 128A et 128B, mesurée depuis le fond du renfoncement 26 ou 126 jusqu'à l'extrémité libre de ces languettes, selon la direction circonférentielle de la ceinture, est comprise entre 50% et 150%, optionnellement entre 70% et 120%, de la largeur LC de la ceinture. Ceci permet, d'un part, d'assurer une bonne surface de contact entre les bords intérieurs des languettes latérales et les bords conjugués de l'agencement mâle d'étanchéité, en l'espèce la languette centrale 24 ou 124, permettant d'obtenir un bon niveau d'étanchéité en fonction des spécifications de la ceinture. D'autre part, les languettes latérales ont ainsi une longueur suffisante pour bien protéger les bords de la bague d'étanchéité. La longueur de la languette centrale est sensiblement égale à celle des languettes latérales.

## Revendications

1. Dispositif de serrage comprenant une ceinture (10) ayant une première et une deuxième extrémité (10A, 10B), une bague d'étanchéité (22) disposée dans un renfoncement annulaire (11) de la ceinture, et une première et une deuxième oreille de serrage (12A, 12B) portées par la ceinture, respectivement au voisinage de sa première et de sa deuxième extrémité (10A, 10B), les oreilles pouvant être déplacées l'une par rapport à l'autre pour serrer la ceinture, les bords du renfoncement (11) formant des ressauts de calage (11A, 11B) pour les bords de la bague d'étanchéité, les première et deuxième extrémités de la ceinture présentant un agencement d'étanchéité (24, 26 ; 124, 126) qui comprend deux languettes latérales (28A, 28B ; 128A, 128B) formées à la deuxième extrémité, chacune de ces languettes latérales s'étendant, dans le sens de la largeur de la ceinture, depuis un bord de la ceinture (10'A, 10'B) jusqu'au renfoncement (11), de sorte que chaque languette latérale comprend une partie de l'un des ressauts de calage (11A, 11B), **caractérisé en ce que** la bague d'étanchéité (22) occupe sensiblement toute la largeur (LR) du renfoncement (11) entre les ressauts de calage (11A, 11B) et **en ce que** l'agencement d'étanchéité comprend une languette centrale (24 ; 124) formée à la première extrémité (10A) de la ceinture et une encoche centrale (26 ; 126), formée à la deuxième extrémité (10B) de la ceinture et délimitée par les languettes latérales (28A, 28B ; 128A, 128B), la languette centrale pénétrant dans l'encoche centrale à l'état serré de la ceinture.

2. Dispositif selon la revendication 1, dans lequel le renfoncement (11) présente un fond plat (11') qui s'étend d'un ressaut de calage à l'autre (11A, 11B).

3. Dispositif selon la revendication 1 ou 2, dans lequel les oreilles de serrage (12A, 12B) sont formées dans des portions de bande (14A, 14B) rapportées sur la ceinture.

4. Dispositif selon la revendication 3, dans lequel les portions de bande (14A, 14B) dans lesquelles sont formées les oreilles de serrage (12A, 12B) présentent une largeur (LP) inférieure ou égale à la largeur (LR) du renfoncement et sont fixées sur la face radialement externe du renfoncement (11).

5. Dispositif selon la revendication 3 ou 4, dans lequel la portion de bande (14A) dans laquelle est formée la première oreille (12A) est fixée à la ceinture (10) en au moins une première zone de fixation (16A) qui se trouve sur la languette centrale (24).

6. Dispositif selon la revendication 5, dans lequel la portion de bande (14A) dans laquelle est formée la première oreille (12A) est en outre fixée à la ceinture (10) en au moins une deuxième zone de fixation (18A) qui, à l'état serré de la ceinture, s'étend au-delà des extrémités des languettes latérales (28A, 28B) dans le sens allant, en suivant la circonférence de la ceinture, de la première extrémité (10A) vers la deuxième extrémité (10B) de la ceinture.

7. Dispositif selon l'une quelconque des revendications 1 à 6, dans lequel la largeur (LR) du renfoncement (11) représente au moins 60%, de préférence au moins 70% voire 80% de la largeur (LC) de la ceinture (10).

8. Dispositif selon l'une quelconque des revendications 1 à 7, dans lequel la largeur minimale (Lℓ, Lm) de la languette centrale (24, 124) représente au moins 50%, de préférence au moins 60% voire 70% de la largeur (LC) de la ceinture (10).

9. Dispositif selon l'une quelconque des revendications 1 à 8, dans lequel les languettes latérales (28A, 28B ; 128A, 128B) ont une longueur (La) comprise entre 50% et 150%, optionnellement entre 70% et 120%, de la largeur (LC) de la ceinture (10).

10. Dispositif selon l'une quelconque des revendications 1 à 9, comprenant deux premières oreilles de serrage (12A, 12'A) disposées au voisinage de la première extrémité (10A) de la ceinture sur deux portions distinctes de la largeur de la ceinture, et deux deuxièmes oreilles (12B, 12'B) de serrage disposées au voisinage de la deuxième extrémité (10B) de la ceinture sur deux portions distinctes de la largeur de la ceinture.

11. Dispositif selon la revendication 10, dans lequel les portions distinctes de la largeur de la ceinture sur lesquelles sont disposées les deux premières oreilles (12A, 12'A) et/ou les deux deuxièmes oreilles (12B, 12'B), sont séparées par une fente circonférentielle (30A, 30B) de la ceinture (10).

12. Dispositif selon l'une quelconque des revendications 1 à 11, comprenant une tige de serrage (20A), retenue par rapport aux deux oreilles (12A, 12B).

13. Dispositif selon l'une quelconque des revendications 1 à 12, dans lequel chaque languette latérale (28A, 28B; 128A, 128B) comprend une partie de l'un des ressauts de calage qui s'étend sur toute la longueur de la languette.

## Patentansprüche

1. Klemmvorrichtung, umfassend einen Ring (10), der ein erstes und ein zweites Ende (10A, 10B) aufweist, einen in einer ringförmigen Vertiefung(11) des Rings angeordneten Dichtungsring (22) sowie eine erste und eine zweite Klemmöse (12A, 12B), die von dem Ring in der Nähe seines ersten bzw. seines zweiten Endes (10A, 10B) getragen sind, wobei die Ösen relativ zueinander bewegt werden können, um den Ring festzuziehen, wobei die Ränder der Vertiefung (11) Keilvorsprünge (11A, 11B) für die Ränder des Dichtungsrings bilden, wobei das erste und das zweite Ende des Rings eine Dichtungsanordnung (24, 26; 124, 126) aufweisen, die zwei Seitenlaschen (28A, 28B; 128A, 128B) umfasst, die an dem zweiten Ende ausgebildet sind, wobei eine jede der Seitenlaschen (28A, 28B; 128A, 128B) sich in der Richtung der Breite des Rings von einem Rand des Rings (10'A, 10'B) bis zu der Vertiefung (11) erstreckt, so dass jede Seitenlasche einen Teil von einem der Keilvorsprünge (11A, 11B) umfasst, **dadurch gekennzeichnet, dass** der Dichtungsring (22) im Wesentlichen die gesamte Breite (LR) der Vertiefung (11) zwischen den Keilvorsprüngen (11A, 11B) einnimmt und dass die Dichtungsanordnung eine mittlere Lasche (24; 124), welche am ersten Ende (10A) des Rings ausgebildet ist, sowie eine mittlere Kerbe (26; 126) umfasst, welche am zweiten Ende (10B) des Rings ausgebildet und durch die Seitenlaschen (28A, 28B; 128A, 128B) begrenzt ist, wobei die mittlere Lasche im festgezogenen Zustand des Rings in die mittlere Kerbe eindringt.

2. Vorrichtung nach Anspruch 1, bei der die Vertiefung (11) einen flachen Boden (11') aufweist, der sich von einem Keilvorsprung zum anderen (11A, 11B) erstreckt.

3. Vorrichtung nach Anspruch 1 oder 2, bei der die Klemmösen (12A, 12B) in an den Ring angesetzten Streifenabschnitten (14A, 14B) ausgebildet sind.

4. Vorrichtung nach Anspruch 3, bei der die Streifenabschnitte (14A, 14B), in denen die Klemmösen (12A, 12B) ausgebildet sind, eine Breite (LP) aufweisen, die kleiner als die oder gleich der Breite (LR) der Vertiefung ist, und an der radial äußeren Seite der Vertiefung (11) befestigt sind.

5. Vorrichtung nach Anspruch 3 oder 4, bei der der Streifenabschnitt (14A), in dem die erste Öse (12A) ausgebildet ist, an dem Ring (10) in wenigstens einem ersten Befestigungsbereich (16A) befestigt ist, der sich an der mittleren Lasche (24) befindet.

6. Vorrichtung nach Anspruch 5, bei der der Streifenabschnitt (14A), in dem die erste Öse (12A) ausgebildet ist, ferner an dem Ring (10) in wenigstens einem zweiten Befestigungsbereich (18A) befestigt ist, der sich im festgezogenen Zustand des Rings über die Enden der Seitenlaschen (28A, 28B) hinaus in der Richtung erstreckt, die dem Umfang des Rings folgend vom ersten Ende (10A) zum zweiten Ende (10B) des Rings verläuft.

7. Vorrichtung nach einem der Ansprüche 1 bis 6, bei der die Breite (LR) der Vertiefung (11) wenigstens 60 %, vorzugsweise wenigstens 70 %, sogar 80 % der Breite (LC) des Rings (10) ausmacht.

8. Vorrichtung nach einem der Ansprüche 1 bis 7, bei der die Mindestbreite (Le, Lm) der mittleren Lasche (24, 124) wenigstens 50 %, vorzugsweise wenigstens 60 %, sogar 70 % der Breite (LC) des Rings (10) ausmacht.

9. Vorrichtung nach einem der Ansprüche 1 bis 8, bei der die Seitenlaschen (28A, 28B; 128A, 128B) eine Länge (La) im Bereich zwischen 50 % und 150 %, optional zwischen 70 % und 120 %, der Breite (LC) des Rings (10) aufweisen.

10. Vorrichtung nach einem der Ansprüche 1 bis 9, umfassend zwei erste Klemmösen (12A, 12'A), die in der Nähe des ersten Endes (10A) des Rings an zwei getrennten Abschnitten der Breite des Rings angeordnet sind, sowie zwei zweite Klemmösen (12B, 12'B), die in der Nähe des zweiten Endes (10B) des Rings an zwei getrennten Abschnitten der Breite des Rings angeordnet sind.

11. Vorrichtung nach Anspruch 10, bei der die getrennten Abschnitte der Breite des Rings, an denen die beiden ersten Ösen (12A, 12'A) und/oder die beiden zweiten Ösen (12B, 12'B) angeordnet sind, durch einen Umfangsschlitz (30A, 30B) des Rings (10) getrennt sind.

12. Vorrichtung nach einem der Ansprüche 1 bis 11, umfassend einen Klemmstift (20A), der gegenüber den beiden Ösen (12A, 12B) gehalten ist.

13. Vorrichtung nach einem der Ansprüche 1 bis 12, bei der jede Seitenlasche (28A, 28B; 128A, 128B) einen Teil von einem der Keilvorsprünge umfasst, der sich über die gesamte Länge der Lasche erstreckt.

## Claims

1. A tightening device comprising a belt (10) having a first and a second end (10A, 10B), a sealing ring (22) disposed in an annular recess (11) of the belt, and a first and a second tightening lug (12A, 12B) born by the belt, respectively in the vicinity of the first and the second end (10A, 10B) of the belt, the tightening lugs being able to be displaced with respect to each other to tighten the belt, the edges of the recess (11) forming wedging steps (11A, 11B) for the edges of the sealing ring, the first and second ends of the belt having a sealing arrangement (24, 26; 124, 126) which comprises two lateral tabs (28A, 28B; 127A, 128B) formed at the second end, each of these lateral tabs extending, widthwise on the belt, from one edge of the belt (10'A, 10'B) to the recess (11), in such a way that each lateral tab comprises a part of one of the wedging steps (11A, 11B), **characterized in that** the sealing ring (22) substantially occupies the entire width (LR) of the recess (11) between the wedging steps (11A, 11B) and **in that** the sealing arrangement comprises a central tab (24; 124) formed at the first end (10A) of the belt and a central notch (26; 126) formed at the second end (10B) of the belt and delimited by the lateral tabs (28A, 28B; 128A, 128B), the central tab penetrating in the central notch in the tightened state of the belt.

2. The device according to claim 1, wherein the recess (11) has a flat bottom (11') that extends from one wedging step to the other (11A, 11B).

3. The device according to claim 1 or 2, wherein the tightening lugs (12A, 12B) are formed in strip portions (14A, 14B) added onto the belt.

4. The device according to claim 3, in which the strip portions (14A, 14B) in which the tightening lugs (12A, 12B) are formed, have a width (LP) lower than or equal to the width (LR) of the recess and are fastened on the radially external face of the recess (11).

5. The device according to claim 3 or 4, wherein the strip portion (14A, 14B) in which the first lug (12A) is formed is fastened to the belt (10) in at least one first fastening area (16A) which is located on the central tab (24).

6. The device according to claim 5, wherein the strip portion (14A) in which the first lug (12A) is formed is further fastened to the belt (10) in at least a second fastening area (18A) which, in the tightened state of the belt, extends beyond the ends of the lateral tabs (28A, 28B) in the direction going from the first end (10A) towards the second end (10B) of the belt, following the circumference of the belt.

7. The device according to any of claims 1 to 6, wherein the width (LR) of the recess (11) represents at least 60% of the width (LC) of the belt (10) of the width (LC) of the belt (10), and preferably at least 70% or even 80% of the width (LC) of the belt (10).

8. The device according to any of claims 1 to 7, wherein the minimum width (Lf, Lm) of the central tab (24, 124) represents at least 50% of the width (LC) of the belt (10), and preferably at least 60% or even 70% of the width (LC) of the belt (10).

9. The device according to any of claims 1 to 8, wherein the lateral tabs (28A, 28B; 128A, 128B) have a length (La) ranging between 50% and 150% of the width (LC) of the belt (10), and preferably between 70% and 120% of the width (LC) of the belt (10).

10. The device according to any of claims 1 to 9, comprising two first tightening lugs (12A, 12'A) disposed in the vicinity of the first end (10A) of the belt on two distinct portions of the belt width, and two second tightening lugs (12B, 12'B) disposed in the vicinity of the second end (10B) of the belt on two distinct portions of the belt width.

11. The device according to claim 10, wherein the distinct portions of the belt width on which the two first lugs (12A, 12'A) and/or the two second lugs (12B, 12'B) are disposed, are separated by a circumferential slit (30A, 30B) of the belt (10).

12. The device according to any of claims 1 to 11, comprising a tightening stem (20A), retained with respect to the two lugs (12A, 12B).

13. The device according to any of claims 1 to 12, wherein each lateral tab (28A, 28B; 128A, 128B) comprises a part of one of the wedging steps that extends over the entire length of the tab.
